# FASCICULE DE BREVET EUROPEEN

(11) **EP 0 317 400 B1**
(45) Date de publication et mention de la délivrance du brevet: **23.03.1994**
(21) Numéro de dépôt: 88402828.3
(22) Date de dépôt: 10.11.1988
(51) Int. Cl.: H04M 11/08, H04L 9/00

(54) **Dispositif et procédé de sécurisation d'échange de données entre un terminal vidéotex et un serveur**
Einrichtung und Verfahren zum gesicherten Datenaustausch zwischen einem Bildschirmtext-Endgerät und einem Anbieter
Apparatus and method for securing data exchange between a teletext terminal and a host

(30) Priorité: 13.11.1987 FR 8715718
(43) Date de publication de la demande: 24.05.1989
(73) Titulaire: FRANCE TELECOM, 75015 Paris (FR)
(72) Inventeur: Boule, Jean-Pierre, F-14540 Soliers (FR); Hamel, Dominique, F-14000 Caen (FR); Menconi, Martial, F-14000 Caen (FR)
(74) Mandataire: Dubois-Chabert, Guy

(56) Documents cités:
- FR-A- 2 603 439
- NACHRICHTENTECHNISCHE ZEITSCHRIFT NTZ, vol. 36, no. 8, août 1983, pages 500-504, Berlin, DE; W. BOSCH: "Bildschirmtext braucht Datensicherheit"
- IBM TECHNICAL DISCLOSURE BULLETIN, vol. 24, no. 7B, décembre 1981, pages 3913-3915, New York, US; R.F. CANTOR et al.: "DES key distribution and user identification technique via a public-key algorithm"
- NATIONAL TELECOMMUNICATIONS CONFERENCE, NTC'78, Birmingham, Alabama, 3-6 décembre 1978, pages 26.1.1-26.1.6, vol. 2, IEEE, New York, US; R.E. LENNON et al.: "Cryptographic key distribution using composite keys"

## Description

L'invention concerne la sécurisation d'échange de données entre un terminal vidéotex et un serveur. Ces données concernent aussi bien le contrôle de l'accès au serveur que des messages transmis une fois la session établie. L'invention s'applique à tous les terminaux vidéotex, notamment mais non exclusivement à ceux désignés sous la dénomination française "Minitel".

Pour contrôler les accès aux systèmes télématiques, qui sont confrontés aux mêmes problèmes que les systèmes téléinformatiques, trois méthodes peuvent être utilisées. Une première méthode repose sur la reconnaissance d'un élément connu de l'utilisateur, généralement un mot de passe. Cependant, ce mot de passe est très vulnérable aux écoutes et aucun terminal classique n'offre de protection contre cette menace. Une deuxième méthode repose sur la reconnaissance d'un élément au sujet de cet individu, comme par exemple une caractéristique biométrique (voix, empreinte digitale). Cependant, si de telles méthodes paraissent très intéressantes, elles n'ont été l'objet d'aucune utilisation jusqu'à ce jour pour des raisons techniques et économiques. Une troisième méthode enfin repose sur la reconnaissance d'un élément possédé par l'individu. Dans cette catégorie, les cartes à microprocesseur et les dispositifs d'authentification semblent être les outils les plus fiables, puisqu'ils mettent en oeuvre un algorithme de calcul secret qui permet de les authentifier en toute certitude. Toutefois, ces systèmes ne semblent pas rencontrer le succès attendu, pour des raisons économiques.

La carte à microprocesseur, à vocation multi-services, nécessite la mise en oeuvre de matériels qui peuvent être jugés lourds et coûteux dans le cadre du seul contrôle d'accès logique. En effet, cette technique nécessite des lecteurs de cartes connectés aux terminaux vidéotex pour les cartes des usagers, des processeurs de sécurité pour les cartes du serveur, et enfin un logiciel de dialogue entre un couple (lecteur-carte) d'un côté et un couple (processeur de sécurité-carte) de l'autre côté.

Les dispositifs d'authentification permettent de diminuer le coût du contrôle d'accès logique mais nécessitent l'emploi d'afficheurs et de claviers ou de capteurs optiques. De plus, l'absence de connexion avec le terminal vidéotex oblige l'usager à jouer le rôle d'interface entre le dispositif d'authentification et le terminal. D'autre part, ces dispositifs utilisent généralement une alimentation électrique autonome, ce qui complique encore leur utilisation.

Le document NACHRICHTENTECHNISCHE ZEITSCHRIFT NTZ, vol.36, n° 8 décrit de manière générale des techniques de sécurisation des données échangées à l'aide de terminaux vidéotex. La sécurisation à l'aide de mots de passe, d'algorithmes de chiffrement et de cartes à microprocesseur est évoquée. Ce document décrit en outre un dispositif de sécurisation constitué par un module inséré entre le serveur et le terminal et connecté par une liaison informatique à la ligne de transmission. Ce dispositif permet au serveur de communiquer un logiciel chiffré à l'utilisation.

Ce dispositif est complexe et nécessite la transformation de la ligne pour y insérer le module. Par ailleurs, il n'y a pas véritablement d'échange entre le terminal et le serveur, mais seulement envoi par ce dernier d'un logiciel chiffré à destination du terminal et d'une clé secrète qui est déchiffrée dans le module pour permettre l'utilisation du logiciel chiffré.

La présente invention remédie à tous les inconvénients de ces techniques antérieures en proposant l'adjonction au terminal d'un boîtier qui se place en aval, sur une prise péri-informatique propre au terminal. Cette adjonction est donc très simple à opérer. Le boîtier additionnel établit un échange avec le serveur au cours d'un mode dit de pré-session au terme duquel une clé de session est définie qui va ultérieurement servir à l'échange de données proprement dit (mode de session) entre le terminal et le serveur. Par ailleurs, le boîtier additionnel surveille l'organe d'aiguillage présent dans le terminal et interrompt immédiatement le mode de pré-session en cas d'anomalie. Enfin, le boîtier est alimenté par le terminal.

L'invention utilise des algorithmes de chiffrement/déchiffrement entre le boîtier additionnel et le serveur, ces algorithmes pouvant être du type DES (Data Encryption Standard) ou RSA (Rivest-Shamir-Adleman). L'usage de clés dans le système DES est décrit dans le document IBM Technical Disclosure Bulletin, vol. 24, n° 7B.

L'invention conduit à un dispositif dont les caractéristiques permettent d'envisager le développement d'applications télématiques pouvant toucher un public très large (eu égard au coût), tout en personnalisant la prestation.

De façon précise, la présente invention a pour objet un dispositif d'échange de données entre, d'une part, un terminal vidéotex possédant un interface ligne, un clavier, un écran, une prise aval péri-informatique, un organe d'aiguillage entre ces moyens et une source d'alimentation, et, d'autre part, un serveur comprenant des moyens de chiffrement/déchiffrement et des moyens de dialogue,
ce dispositif étant caractérisé par le fait qu'il comprend en outre un boîtier additionnel connecté sur la prise péri-informatique du terminal vidéotex et alimenté par la source d'alimentation du terminal vidéotex, ce boîtier additionnel comprenant des moyens de chiffrement/déchiffrement et des moyens de dialogue, lesdits moyens de chiffrement/déchiffrement du boîtier additionnel et ceux du serveur ainsi que lesdits moyens de dialogue du boîtier additionnel et ceux du serveur étant aptes à coopérer pour établir :
- d'abord une pré-session d'échange, dans laquelle ils définissent une clé de session qui est transmise selon une clé de base,
- ensuite une session d'échange dans laquelle les moyens de dialogue du boîtier additionnel et du serveur coopèrent pour permettre l'échange de messages chiffrés et/ou signés selon la clé de session,
- ledit boîtier additionnel comprenant des moyens aptes à agir sur l'organe d'aiguillage du terminal vidéotex, à surveiller toute autre action sur cet organe d'aiguillage et à entraîner l'avortement de la pré-session en cas de présence d'une autre action sur l'organe d'aiguillage ou d'anomalie.

Avantageusement, pendant la saisie au clavier par l'utilisateur d'un code confidentiel, le boîtier agit sur l'organe d'aiguillage pour interdire la liaison entre l'interface ligne et le clavier.

La clé de session peut être produite à partir d'au moins un premier nombre aléatoire et comprend de préférence une première clé primaire produite par les seconds moyens de dialogue du serveur.

Avantageusement, le serveur peut envoyer vers le boîtier, par l'intermédiaire du terminal vidéotex, la première clé primaire.

Dans un mode préféré de réalisation, le boîtier comprend des premiers moyens de mémorisation, tandis que le serveur comprend des seconds moyens de mémorisation, les deux moyens de mémorisation contenant au moins une partie de ladite clé de base.

Avantageusement, les premiers moyens de mémorisation comprennent des moyens de mémoire morte figée et des moyens de mémoire morte programmable.

Les moyens de mémoire morte programmable peuvent comprendre des informations particulières chiffrées par les premiers moyens de chiffrement/déchiffrement à l'aide d'une clé de stockage.

De préférence, la clé de stockage est la combinaison au moins d'une clé initiale et d'une clé intermédiaire, la clé initiale étant stockée dans les moyens de mémoire morte figée tandis que la clé intermédiaire est stockée dans les moyens de mémoire morte programmable, chiffrée par les premiers moyens de chiffrement/déchiffrement à l'aide de la clé initiale.

Dans une première variante de l'invention, ladite clé de base est une clé unique stockée à la fois dans les premiers et seconds moyens de mémorisation.

Dans ce cas, la clé de session est avantageusement la combinaison de la première clé primaire et d'une deuxième clé primaire générée par les premiers moyens de dialogue du boîtier.

La deuxième clé primaire peut être générée également à partir d'un deuxième nombre aléatoire qui dépend de préférence du temps s'écoulant entre la demande de saisie du code confidentiel et la saisie proprement dite au clavier.

Dans ce premier mode de réalisation, la suite prédéterminée d'opérations comprend de préférence l'envoi par le boîtier vers le serveur de la deuxième clé primaire et la clé de base est, de préférence, la clé de stockage.

Dans une seconde variante de l'invention, la clé de base comprend une clé publique stockée dans les seconds moyens de mémorisation et une clé secrète stockée dans les premiers moyens de mémorisation, les clés publique et secrète étant complémentaires l'une de l'autre.

Dans ce cas, la clé de session est avantageusement la première clé primaire.

Selon l'invention, le boîtier additionnel peut comprendre en outre un mode particulier, activé au moins lors de la première mise sous tension du boîtier, permettant de stocker dans le boîtier des informations personnalisées.

L'invention a également pour objet un procédé d'échange de données entre, d'une part, un terminal vidéotex et, d'autre part, un serveur, par chiffrement et déchiffrement de données, ce procédé étant caractérisé par le fait que, avant d'établir une session d'échange de données, on définit, dans une pré-session entre le serveur et le terminal, une clé de session que l'on transmet entre le serveur et le terminal vidéotex à l'aide d'une clé de base prédéterminée, on provoque l'avortement de cette pré-session pour toute anomalie dans la pré-session et on utilise ensuite la clé de session pour la session d'échange de données.

D'autres avantages et caractéristiques de l'invention apparaîtront à la lecture de la description détaillée ci-après et des dessins annexés, sur lesquels :
- la figure 1 est un schéma d'un dispositif selon l'invention,
- la figure 2 est un schéma d'un mode de réalisation d'un boîtier additionnel du dispositif de la figure 1,
- la figure 3 est un synoptique schématique des principaux constituants du boîtier additionnel de la figure 2,
- la figure 4 est un organigramme décrivant le début du mode de pré-session du boîtier additionnel selon l'invention,
- la figure 5 est un organigramme décrivant une première variante de la fin du mode de pré-session du boîtier,
- la figure 6 est un organigramme décrivant une seconde variante de la fin du mode de pré-session du boîtier,
- la figure 7 est un organigramme décrivant une première partie du fonctionnement d'un mode particulier du boîtier selon l'invention, et
- la figure 8 est un organigramme décrivant une deuxième partie du fonctionnement du mode particulier du boîtier selon l'invention.

Les dessins annexés comportant pour l'essentiel des éléments de caractère certain pourront servir non seulement à mieux faire comprendre la description détaillée ci-après mais aussi à la définition de l'invention le cas échéant.

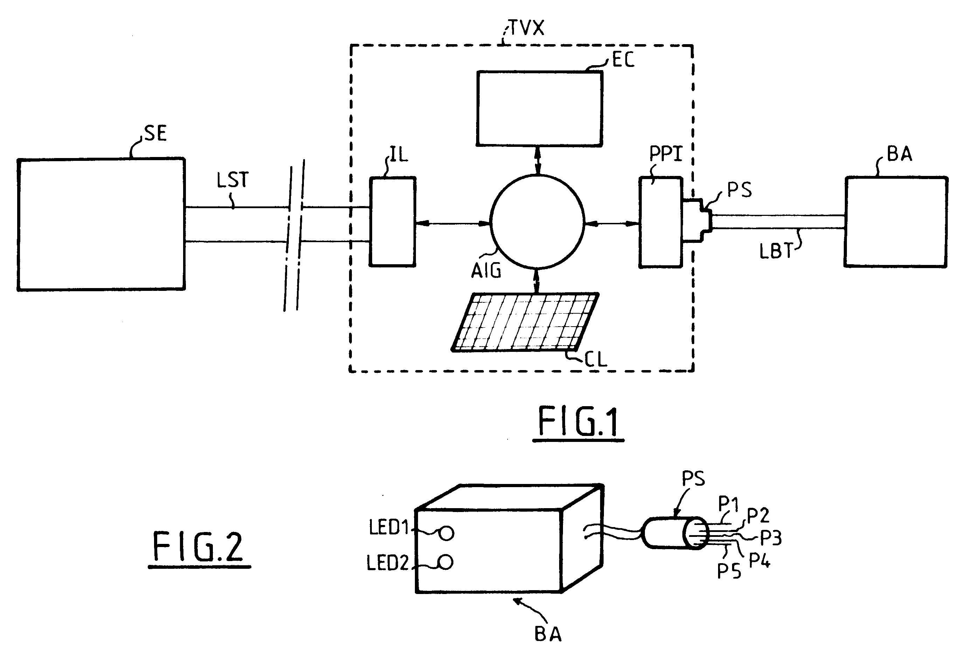

Le dispositif selon l'invention représenté sur la figure 1 comprend un serveur SE relié par l'intermédiaire d'une ligne télématique LST à un terminal vidéotex TVX. Dans la suite du texte, le terme "terminal vidéotex" sera remplacé par le terme "terminal". Le terminal TVX comprend de façon classique un interface ligne IL, un écran EC, un clavier CL et une prise péri-informatique PPI située en aval de la liaison LST. Ces composants du terminal sont gérés par un organe de gestion d'aiguillage AIG contenant le logiciel de protocole du terminal. Le dispositif selon l'invention comprend un boîtier additionnel BA connecté à l'aide d'une prise spéciale PS par l'intermédiaire d'une ligne LBT à la prise péri-informatique PPI. Le boîtier BA est donc connecté en aval du terminal par opposition à une connexion en amont du terminal, c'est-à-dire entre l'interface ligne IL et le serveur SE.

Le boîtier BA est représenté sous forme schématique sur la figure 2. La dimension de ce boîtier est environ de 8 cm de longueur sur 3 cm de largeur et 2 cm de profondeur. Il comporte deux diodes électroluminescentes LED1 et LED2 agencées de telle sorte qu'elles sont visibles par l'utilisateur lorsque le boîtier est enfiché sur la prise péri-informatique par l'intermédiaire de sa prise spéciale PS. Cette prise spéciale PS comprend cinq broches P1 à P5 dont les fonctions seront précisées ci-après. La prise PS permet d'alimenter en énergie le boîtier BA de telle sorte qu'il n'est pas utile de le munir d'une alimentation autonome.

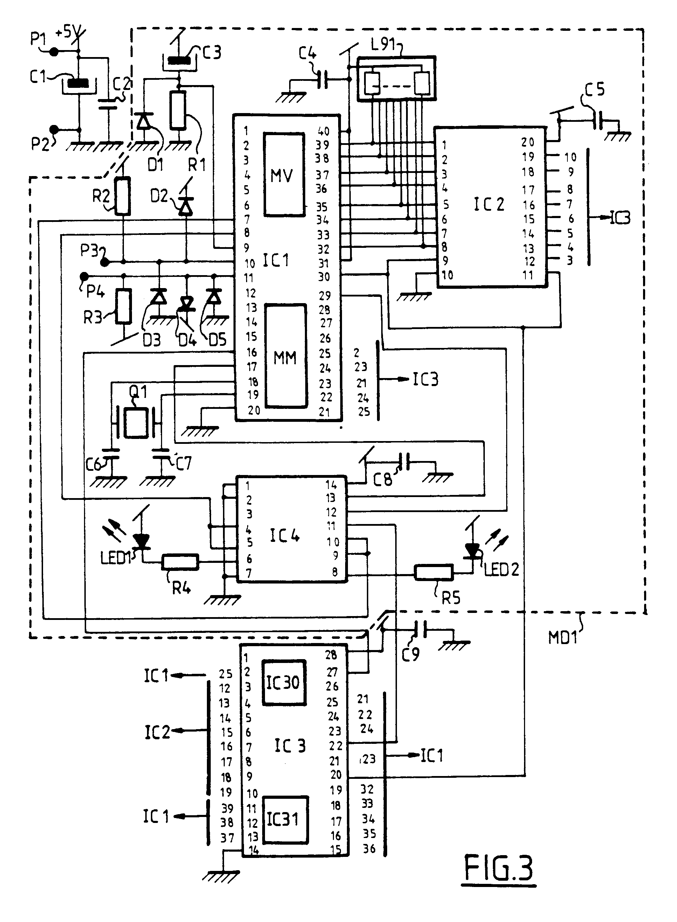

Les principaux constituants du boîtier BA sont représentés sur la figure 3. La borne P1 de la prise PS du boîtier BA fournit la tension de polarisation 5 Volts. Elle est reliée à la masse par l'intermédiaire d'un condensateur C2 d'une valeur de 0,1 microfarad et par l'intermédiaire d'un condensateur électrochimique C1 d'une valeur de 10 microfarads. La borne P2 de la prise du boîtier BA fournit la référence de masse. La prise P5 est également reliée à la masse mais n'est pas représentée sur cette figure.

Le boîtier BA comprend des moyens de dialogue MD1 comportant une unité centrale IC1 cadencée par une horloge Q1. L'unité centrale IC1 comporte une mémoire vive MV et une mémoire morte MM. Cette mémoire morte MM est une mémoire morte figée, c'est-à-dire non programmable. Cette unité centrale est un microcontrôleur du type de celui disponible sous la référence 8051 auprès de la Société des Etats-Unis "INTEL". La fréquence de l'horloge Q1 est de 10 MHz. Les bornes 18, 19 de l'unité centrale IC1 sont reliées aux bornes de l'horloge Q1 et respectivement à la masse par l'intermédiaire de deux condensateurs C6 et C7 d'une valeur de 22 picofarads. Les bornes 32 à 39 de l'unité centrale IC1 sont reliées respectivement aux bornes 8 à 1 d'une mémoire-verrou IC2 ("latch"). Cette mémoire-verrou IC2 est du type de celle disponible sous la référence 8282 auprés de la Société "INTEL". Les bornes 1 à 8 de la mémoire-verrou IC2 sont également reliées à la tension de polarisation 5 Volts par l'intermédiaire d'un circuit de mise en haute impédance L91 constitué de résistances d'une valeur de 10 kiloohms. La borne 31 de l'unité centrale IC1 est reliée à la tension de polarisation +5 Volts ainsi qu'à la masse à travers un condensateur C4 d'une valeur de 10 nanofarads. La borne 30 de l'unité centrale IC1 est reliée à la fois aux bornes 9 et 11 de la mémoire-verrou IC2.

La borne 9 de l'unité centrale IC1 est reliée à la tension de polarisation par l'intermédiaire d'un condensateur électrochimique C3 d'une valeur de 10 microfarads et à la masse par l'intermédiaire d'une résistance R1 (5,6 kiloohms) en parallèle avec une diode D1 du type de celle disponible sous la référence lN4148 auprés de la Société française "SILEC". Les autres diodes citées dans la suite du texte seront identiques à la diode D1. Les bornes 10 et 11 de l'unité centrale IC1 sont reliées respectivement aux bornes P3 et P4 de la prise de sortie du boîtier BA. La borne P3 constitue la borne d'émission tandis que la borne P4 constitue la borne de réception. La borne 10 est reliée à la tension de polarisation par l'intermédiaire d'une résistance R2 de 5,6 kiloohms et d'une diode de sécurité D2. La borne 10 est également reliée à la masse par l'intermédiaire d'une autre diode de sécurité D3. De la même façon, la borne 11 est reliée à la tension de polarisation par l'intermédiaire d'une résistance R3 de 5,6 kiloohms et d'une diode de sécurité D4 tandis qu'elle est reliée à la masse par l'intermédiaire d'une diode de sécurité D5.

Le boîtier BA comprend également une mémoire morte programmable IC3 et un ensemble de portes logiques "ET" IC4. La mémoire IC3 est du type de celle disponible sous la référence 2864 auprès de la Société "INTEL" et l'ensemble IC4 est du type de celui disponible sous la référence 7408 auprés de la Société des Etats-Unis "TEXAS INSTRUMENT". Les bornes 12 à 19 de la mémoire-verrou IC2 sont reliées respectivement aux bornes 3 à 10 de la mémoire IC3. Les bornes 2, 11 à 13, 15 à 19, 21, 23 à 25 de la mémoire IC3 sont reliées respectivement aux bornes 25, 39 à 37, 36 à 32, 23, 24, 22, 21 de l'unité centrale IC1. La borne 28 de la mémoire IC3 est reliée d'une part à la tension de polarisation et, d'autre part, à la masse à travers un condensateur C9 de 10 nanofarads. Les bornes 14 et 27 de la mémoire IC3 sont reliées respectivement à la masse et à la borne 16 de l'unité centrale IC1.

L'ensemble de portes logiques IC4 commande la diode électroluminescente LED1 par l'intermédiaire d'une résistance R4 d'une valeur de 470 ohms reliée à sa borne 6 et la deuxième diode électroluminescente LED2 par l'intermédiaire d'une résistance R5 d'une valeur également de 470 ohms reliée à la borne 8. La diode LED1 est rouge et constitue un premier moyen de visualisation, tandis que la diode LED2 est vert et constitue un deuxième moyen de visualisation. La borne 14 de l'ensemble IC4 est reliée à la tension de polarisation 5 Volts et à la masse à travers un condensateur C8 d'une valeur de 10 nanofarads. Les bornes 1, 2, 7 sont reliées à la masse, les bornes 4 et 5 à la borne 8 de l'unité centrale IC1, les bornes 9 et 10 à la borne 7 de l'unité centrale IC1 et les bornes 12 et 13 respectivement aux bornes 29 et 17 de l'unité centrale.

L'unité centrale IC1 comporte deux algorithmes de chiffrement/déchiffrement qui sont pour le premier un algorithme "DES" (DATA ENCRYPTION STANDARD) et pour le second un algorithme "RSA" ("RIVEST SHAMIR ADLEMAN"). Ces deux algorithmes de chiffrement font partie de premiers moyens de chiffrement/déchiffrement pour le boîtier BA. Les algorithmes "DES" et "RSA" sont stockés respectivement dans la mémoire morte MM de l'unité centrale IC1 et dans une partie IC3O de la mémoire IC3.

Il est rappelé ici que l'algorithme de chiffrement/déchiffrement "DES" fonctionne à partir d'une clé de base KB. Aussi pour que le boîtier BA et le serveur SE puissent dialoguer à l'aide de "DES", est-il nécessaire que la clé KB soit stockée à la fois dans le boîtier BA et dans le serveur SE. L'algorithme "RSA" fonctionne à l'aide d'une clé de base qui est en fait la combinaison de deux clés dépendantes l'une de l'autre, l'une étant une clé publique KBP stockée dans le serveur et l'autre une clé secrète KBS stockée dans le boîtier.

La mémoire morte MM de l'unité centrale IC1 comporte en outre la clé de base KB nécessaire pour l'algorithme "DES" et la clé secrète KBS nécessaire pour l'algorithme "RSA". Une autre partie IC31 de cette mémoire IC3 contient, sous forme chiffrée par l'algorithme "DES" à l'aide d'une clé de stockage KST, un code d'authentification I du boîtier BA et un code confidentiel CC propre à un utilisateur donné.

La mémoire morte MM, la mémoire vive MV et la mémoire IC3 constituent des premiers moyens de mémorisation pour le boîtier. La partie IC31 de la mémoire IC3 constitue des moyens de mémoire morte programmable pour le boîtier BA. La mémoire morte MM constitue des moyens de mémoire morte figée pour le boîtier BA.

Bien entendu, le choix du microcontrôleur IC1 n'est pas limitatif. On pourrait par exemple choisir un microcontrôleur du type de celui disponible sous la référence 8052 auprès de la Société "INTEL". Dans ce cas, le code d'authentification I et le code confidentiel seraient stockés dans une petite mémoire morte programmable externe au microcontrôleur 8052, et le contenu de la partie IC30 ci-avant citée serait regroupé dans la mémoire morte figée du microcontrôleur 8052.

De même, on pourrait choisir un microcontroleur du type de celui disponible sous la référence 68HC11 auprès de la Société des Etats-Unis "MOTOROLA". Dans ce cas, il ne serait plus nécessaire d'avoir une mémoire externe pour stocker les codes confidentiels CC et d'authentification I, car ceux-ci seraient mémorisés dans la mémoire morte programmable du microcontrôleur.

Le serveur comprend, d'une façon analogue, des seconds moyens de dialogue et des seconds moyens de chiffrement/déchiffrement constitués soit par un algorithme "DES" soit par un algorithme "RSA". La clé de base KB de l'algorithme "DES" est également stockée dans des seconds moyens de mémorisation. Ces seconds moyens de mémorisation comprennent également la clé publique KBP utilisée pour l'algorithme "RSA".

Le dispositif selon l'invention ainsi décrit pourra donc soit fonctionner à l'aide d'un algorithme "DES", soit à l'aide d'un algorithme "RSA" selon les besoins, le choix de l'algorithme pouvant se faire à l'aide d'une information contenue dans le code d'authentification I.

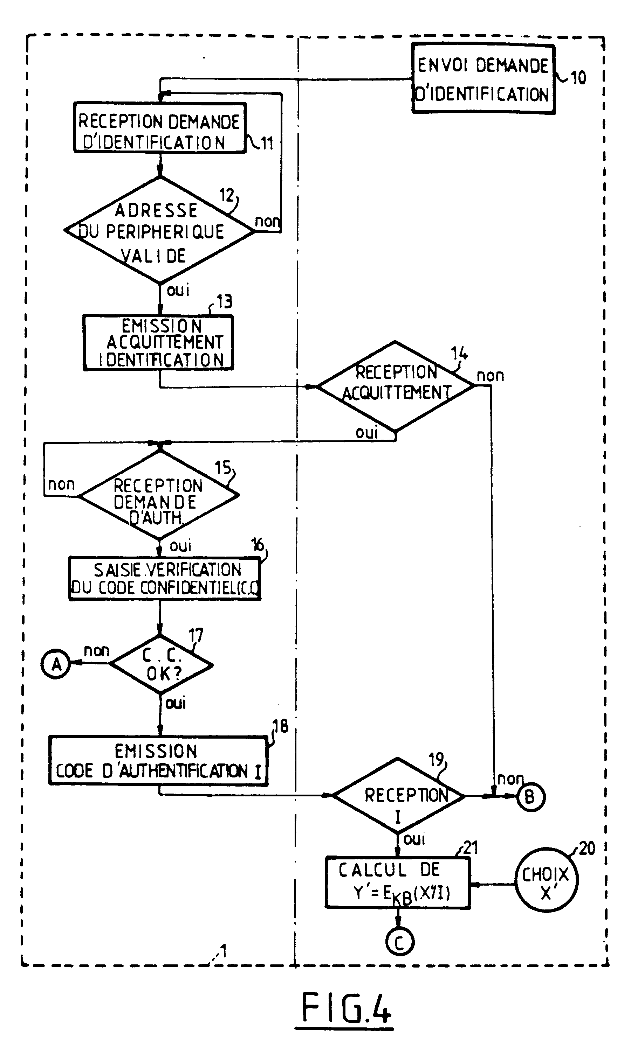

Le fonctionnement du dispositif ci-avant décrit va maintenant être expliqué en se référant plus particulièrement aux figures 4 à 8.

D'une façon générale, le fonctionnement du boîtier comporte deux modes principaux :
- un mode de pré-session dans lequel le boîtier va s'authentifier,
- un mode de session, qui peut être mis en oeuvre postérieurement au mode de pré-session, pour sécuriser l'échange de messages entre le boîtier, par l'intermédiaire du terminal, et le serveur.

Le mode de pré-session peut être effectué soit en utilisant l'algorithme "DES" soit en utilisant l'algorithme "RSA". Le mode de session sera avantageusement exécuté avec l'algorithme "DES". Dans le cas de l'utilisation de l'algorithme "DES" dans le mode de pré-session, il y a authentification mutuelle du serveur et du boîtier, et la clé de base KB est la clé de stockage KST.

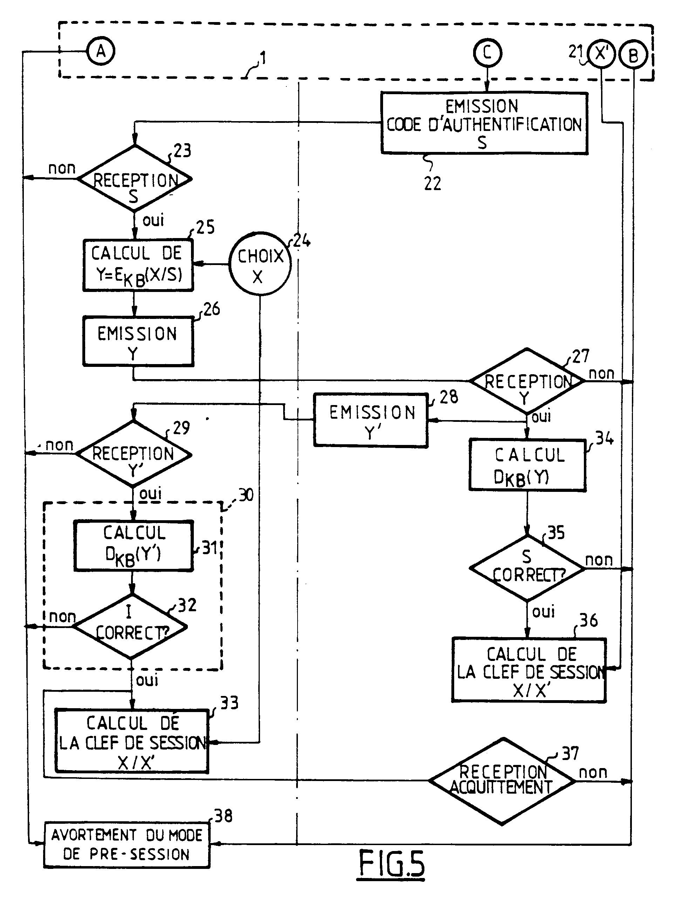

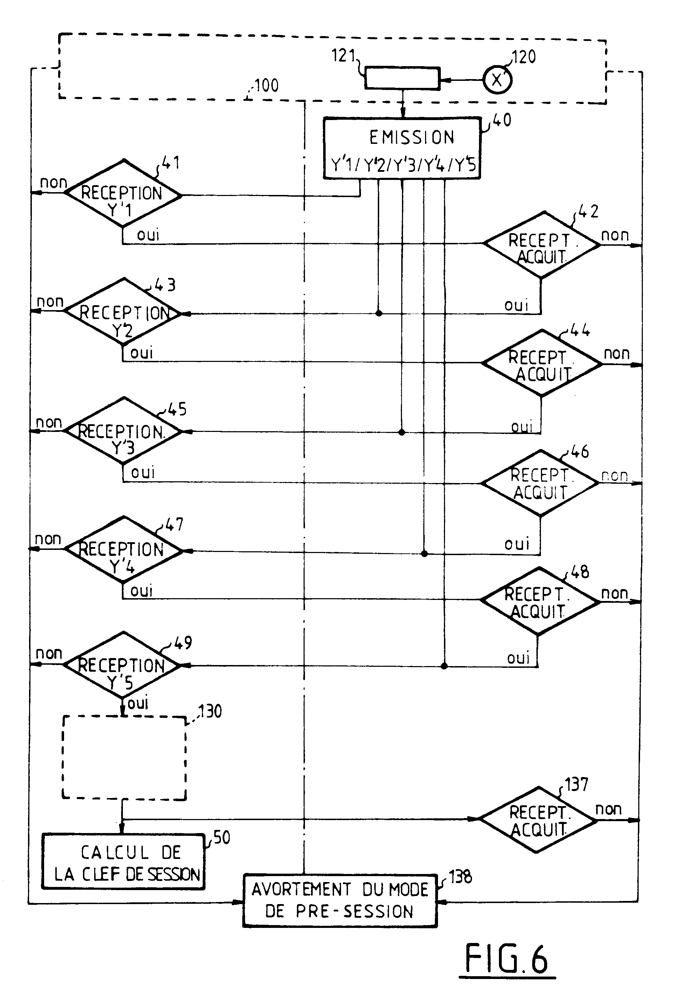

Le début du mode de pré-session est représenté sur l'organigramme de la figure 4, qui s'applique aux deux algorithmes; les organigrammes des figures 5 et 6 s'appliquent respectivement aux algorithmes "DES" et "RSA", et représentent les deux variantes de la fin du mode de pré-session.

Dans ce mode de pré-session, le boîtier agit sur l'organe d'aiguillage AIG pour configurer les divers aiguillages du terminal. Parallèlement, le boîtier surveille toute autre action sur cet organe d'aiguillage, c'est-à-dire toute action d'origine externe au boîtier (serveur, ou tiers malveillant essayant de modifier les aiguillages). Toute autre action, c'est-à-dire par exemple une demande de modification d'aiguillage non requise par le boîtier, entraînera l'avortement de ce mode de pré-session.

Egalement dans ce mode de pré-session, le boîtier interdira la liaison entre le clavier du terminal et l'interface-ligne, de façon qu'aucune information tapée par l'utilisateur ne puisse être transmise en clair sur la ligne LST. A chaque fois que cette interdiction est effective, les premiers moyens de visualisation LED1 s'allumeront.

On va maintenant décrire l'utilisation du début du mode de pré-session par l'algorithme "DES".

Après que l'utilisateur ait tapé sur son terminal le code d'accès au serveur choisi, le serveur envoie au boîtier dans l'étape 10 une demande d'identification. Cette identification consiste à vérifier que l'adresse du boîtier est valide. Le boîtier reçoit cette demande dans l'étape 11, vérifie dans l'étape 12 la validité de l'adresse et si celle-ci est valide, envoie dans l'étape 13 un acquittement d'identification au serveur. Celui-ci reçoit cet acquittement dans l'étape 14 qui marque le début d'une suite prédéterminée d'opérations entre les premiers moyens de dialogue du boîtier et les seconds moyens de dialogue du serveur.

D'une façon générale, un message échangé entre le serveur et le boîtier comprend une série d'octets TLV dans laquelle l'octet T indique le type d'opération, l'octet V indique le champ des données proprement dites, et l'octet L indique la longueur en octets du champ V des données.

Après avoir reçu l'acquittement dans l'étape 14, le serveur envoie au boîtier une demande d'authentification. Cette demande d'authentification, correspondant à un octet T égal à 01, est reçue par le boîtier dans l'étape 15 et, après avoir agi sur l'organe d'aiguillage AIG de façon à interdire la liaison clavier interface ligne, le boîtier initialise, dans l'étape 16, un message à l'écran EC demandant la saisie du code confidentiel CC de l'utilisateur. Ce dernier saisit alors son code confidentiel au clavier.

Après saisie de ce code confidentiel, le boîtier vérifie, dans l'étape 17, sa concordance avec la donnée mémorisée dans les moyens de mémoire morte programmable du boîtier. Pour effectuer cette comparaison, les premiers moyens de chiffrement/déchiffrement déchiffrent le code confidentiel à l'aide de la clé de stockage KST. En cas de concordance, le boîtier envoie son code d'authentification I, dans l'étape 18, vers le serveur. Celui-ci le reçoit dans l'étape 19 et l'octet T vaut alors 02. Le serveur choisit alors, dans l'étape 20, à l'aide d'un algorithme de génération du nombre aléatoire approprié, un nombre aléatoire X'. A l'aide de ce nombre X' du code d'authentification I et de la clé de base KB de l'algorithme "DES", les seconds moyens de chiffrement/déchiffrement du serveur calculent une donnée cryptographique Y' à l'aide de l'algorithme "DES" (étape 21). Le nombre X' constitue une première clé primaire dont la signification sera donnée ci-après.

Dans la suite du texte, la série des étapes 10 à 21 sera désignée par la référence 1. La suite de l'organigramme se rapportant à la fin du mode de pré-session est représentée sur la figure 5.

Après avoir calculé la donnée cryptographique Y', le serveur envoie son code d'authentification S, dans l'étape 22, vers le boîtier. Celui-ci le reçoit dans l'étape 23, l'octet T valant également la valeur 02. A la réception de ce code d'authentification S, les premiers moyens de dialogue du boîtier choisissent (étape 24)un deuxième nombre aléatoire X et les premiers moyens de chiffrement/déchiffrement calculent une donnée cryptographique Y à l'aide de l'algorithme "DES", de la clé de base KB, du deuxième nombre aléatoire X et du code d'authentification S (étape 25).

Ce deuxième nombre aléatoire X, qui constitue une deuxième clé primaire, est généré par les premiers moyens de dialogue à partir du temps qui s'est écoulé entre le moment où le boîtier a demandé à l'utilisateur de saisir son code confidentiel et le moment où ce dernier l'a effectivement saisi au clavier. Ce temps est rapporté au nombre de cycles d'horloge.

Après avoir déterminé la donnée cryptographique Y, le boîtier l'envoie dans l'étape 26 vers le serveur, l'octet T valant alors 03. Le serveur reçoit Y dans l'étape 27 et le déchiffre alors dans l'étape 34 à l'aide de l'algorithme "DES" en utilisant la clé de base KB. Ce déchiffrement permet donc au serveur de retrouver son code d'authentification S et de le vérifier. Si cette vérification est positive, le serveur obtient alors le deuxième nombre aléatoire X et la réunion du premier nombre aléatoire X' et de ce deuxième nombre aléatoire X constituera la clé de session définitive KSS utilisable par l'algorithme "DES" dans le mode de session (étape 36). Cette clé de session KSS sera stockée dans la mémoire vive MV.

Avant de déchiffrer la donnée cryptographique Y dans l'étape 34, le serveur S envoie la donnée cryptographique Y' qu'il avait calculée dans l'étape 21. Le boîtier reçoit cette donnée cryptographique dans l'étape 29 et la déchiffre à l'aide de la clé de base KB de l'algorithme "DES". Ainsi, dans l'étape 31, le boîtier retrouve son code d'authentification I ainsi que le premier nombre aléatoire X'. La vérification de I est effectuée dans l'étape 32 et si cette vérification est positive, le boîtier envoie un acquittement que reçoit le serveur dans l'étape 37. Ceci étant fait, le boîtier calcule (étape 33) la clé de session définitive KSS de l'algorithme "DES" qui est la réunion des nombres aléatoires X et X'. Dans la suite du texte, les étapes 31 et 32 seront désignées par la référence 30.

L'étape 37 marque la fin du mode de pré-session du boîtier BA. Cette fin de mode est marquée par l'activation des deuxièmes moyens de visualisation LED2. Dans ce mode de pré-session, une anomalie dans la saisie du code confidentiel, dans l'étape 17, provoque un affichage sur l'écran du terminal d'un message indiquant que le code confidentiel est faux. L'utilisateur a droit à trois messages faux. Si le code confidentiel n'est pas correct après ces trois messages, il y a avortement du mode de pré-session dans l'étape 38. De même, tout au long de ce mode de pré-session, il est important que la suite prédéterminée des opérations soit effectuée dans l'ordre voulu. Cet ordre est représenté par les valeurs croissantes 01, 02, 03 de l'octet T. Si le boîtier ou le serveur reçoit un octet d'une valeur donnée sans avoir reçu l'octet de valeur précédente, il y a également avortement du mode de pré-session dans l'étape 38. Enfin, une anomalie dans le résultat d'une opération provoque l'avortement de ce mode de pré-session. Une telle anomalie peut être la non-concordance du code d'authentification I reçu avec celui mémorisé (étape 32).

Si le mode de pré-session s'est effectué correctement, le serveur et le boîtier se sont donc authentifiés mutuellement et le boîtier peut passer dans son mode de session. L'utilisateur peut alors envoyer vers le serveur (et réciproquement) des messages chiffrés ou signés. Ces messages seront chiffrés ou signés à l'aide de l'algorithme "DES" utilisant la clé de session KSS.

Dans le cas où l'utilisateur ou le serveur ne souhaite pas transmettre des messages chiffrés ou signés, ceux-ci sont alors transmis en clair sur la ligne LST et le boîtier BA est alors "transparent" vis-à-vis du terminal tant qu'un chiffrement ou une signature n'est pas requis.

Par contre, dans le mode de session, le serveur peut demander au boîtier d'effectuer une saisie chiffrée des données tapées au clavier par l'utilisateur. Dans ce cas, à la réception d'un tel message, caractérisé par un octet T égal à 04 et un octet L égal à 01, le boîtier BA va agir sur l'organe d'aiguillage AIG de façon que celui-ci interdise la sortie en clair sur la ligne LST des données tapées au clavier par l'utilisateur. Ces données seront préalablement chiffrées par l'algorithme "DES" avant leur envoi sur la ligne LST.

Un exemple de donnée à saisir chiffrée peut être le montant d'une transaction dans le cas d'un service d'une banque à domicile. Ainsi, la confidentialité de cette transaction est sauvegardée. Le serveur peut également envoyer des informations chiffrées (par exemple le solde d'un compte bancaire) sur la ligne LST et celles-ci seront déchiffrées à l'aide de l'algorithme "DES" et de la clé de session KSS.

Il peut être parfois inutile de chiffrer un message mais par contre il peut être nécessaire de vérifier l'intégrité de ce message à sa réception. C'est pourquoi le serveur et/ou le boîtier ont la possibilité de signer les messages transmis.

Un message contenant plusieurs blocs de huit octets de données est signé de la façon suivante : le premier de ces blocs est, d'une part, envoyé en clair sur la ligne LST, d'autre part chiffré grâce à l'algorithme "DES"; le second bloc est d'une part envoyé en clair sur la ligne LST à la suite du premier bloc et, d'autre part, comparé, par exemple dans une porte logique "OU EXCLUSIF", avec le premier bloc chiffré, le résultat de cette comparaison étant à son tour chiffré par l'algorithme "DES". Le processus se répète ainsi jusqu'à épuisement des blocs du message. La signature finale est ensuite envoyée sur la ligne LST. A la réception du message, le serveur ou le boîtier, procédant selon la même méthode, vérifie la signature, et est ainsi assuré que le message reçu l'est bien dans son intégralité. L'annonce d'un message signé se caractérise par le fait que l'octet T prend la valeur 05.

Dans le mode de session, le boîtier peut recevoir indifféremment soit un message référencé par un octet T égal à 4, soit un message référencé par un octet T égal à 5. Dans ce mode de session du boîtier, toute tentative d'action par un intrus sur la commande d'aiguillage du terminal entraîne l'avortement du mode de session et la déconnexion du boîtier. Cette déconnexion peut également être obtenue par une demande de déconnexion de la part de l'utilisateur ou du serveur. La clé de session est alors effacée et sera remplacée par une autre clé lors d'une session future.

Si l'on se réfère maintenant à la figure 6, on voit que l'on a représenté un organigramme de fonctionnement de la fin du mode de pré-session du boîtier utilisant l'algorithme de chiffrement "RSA". Le début du mode peut être lu sur la figure 4. Sur la figure 6, les éléments analogues ou présentant des fonctions analogues par rapport à ceux représentés sur les figures 4 et 5 seront référencés à l'aide de références augmentées de 100 par rapport aux éléments des figures 4 et 5. On ne décrira ci-après que les différences entre la figure 6 et les figures 4 et 5.

Bien que l'algorithme "RSA" soit utilisé, les données personnalisées CC et I sont toujours déchiffrées par l'algorithme "DES" à l'aide de la clé de stockage KST.

Après avoir effectué la série d'étapes 101 de la figure 4, le serveur a donc déterminé dans l'étape 121 la donnée cryptographique Y', à l'aide de l'algorithme "RSA", de la clé publique KBP, du code d'authentification I du boîtier et du nombre aléatoire X'. Dans la version de l'algorithme "RSA" utilisée par les Demandeurs, la donnée cryptographique est codée sur 40 octets. La transmission de la ligne LST ne permettant, dans ce mode de réalisation, qu'une transmission de huit octets, il est donc nécessaire de diviser la donnée Y' en cinq données cryptographiques Y'1, Y'2, Y'3, Y'4, Y'5. Les cinq données cryptographiques Y'1 à Y'5 sont successivement envoyées dans l'ordre, vers le boîtier, dans l'étape 40. Le boîtier les reçoit respectivement lors des étapes 41, 43, 45, 47 et 49 et émet alors vers le serveur un acquittement que celui-ci reçoit dans les étapes 42, 44, 46 et 48. A la suite de la réception de la donnée Y'5 dans l'étape 49, les premiers moyens de chiffrement/déchiffrement procèdent, dans la série d'étapes 130, au déchiffrage par l'algorithme "RSA" et la clé secrète KBS associée à la clé publique KBP, de la donnée cryptographique Y'.

Bien entendu, il serait possible d'utiliser un mode de codage tel que la transmission de la donnée Y' s'effectue en une fois.

Après avoir vérifié que le code d'authentification I était correct, on obtient donc le nombre aléatoire X' et un acquittement est envoyé vers le serveur que celui-ci reçoit dans l'étape 137. Le nombre aléatoire X' étant sur 32 octets (car le code d'authentification I est sur 8 octets), il est nécessaire d'effectuer un compactage de ce nombre X' dans l'étape 50 afin de le ramener sur huit octets. Ce nombre X' compacté constituera alors la clé de session KSS pour l'algorithme "DES" éventuellement utilisé par la suite lors du mode de session.

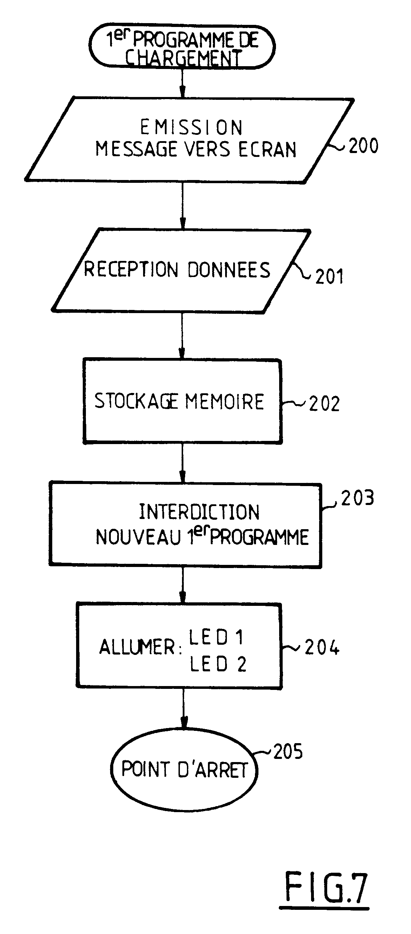

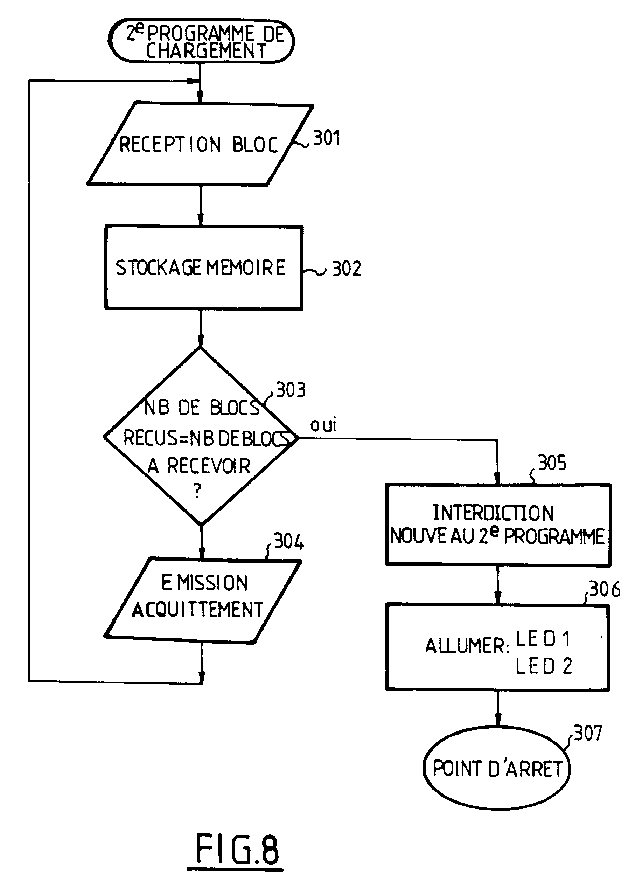

On va maintenant décrire un mode particulier de fonctionnement du dispositif selon l'invention en se référant plus particulièrement aux figures 7 et 8.

On a vu précédemment qu'il était nécessaire que le code d'authentification I du boîtier, ainsi que le code confidentiel de l'utilisateur, soient mémorisés dans les moyens de mémoire morte programmable IC31. Il est donc avantageux d'avoir dans l'unité centrale IC1 un premier programme de chargement de ces données. Ce premier programme se mettra automatiquement en route lors de la première mise sous tension du boîtier à un terminal approprié muni d'un écran. Un message s'affichera alors sur l'écran demandant d'introduire le code d'authentification I du boîtier ainsi que le code confidentiel de l'utilisateur potentiel. Ceci s'effectue dans l'étape 200. L'étape 201 consiste en une réception de ces données, puis dans l'étape 202, en un stockage de ces données dans la mémoire préalablement chiffrées par l'algorithme "DES" extérieurement au boîtier. L'étape 202 étant terminée, l'étape 203 est une étape dans laquelle on interdit un nouveau chargement de code d'authentification et de code confidentiel. On indique ensuite dans l'étape 204 la fin du changement des données par le fonctionnement des diodes électroluminescentes LED1 et LED2 et l'étape 205 met alors fin au premier programme de chargement.

Le deuxième programme de chargement, dont l'organigramme est représenté sur la figure 8, est un programme permettant d'introduire des données ou des logiciels spécifiques dans le boîtier. Ces données ou ces logiciels peuvent être par exemple un mémento téléphonique personnalisé avec connexion automatique sur le numéro choisi ou un éditeur de texte local. Ce deuxième programme se mettra automatiquement en route lors de la deuxième mise sous tension du boîtier.

Si l'on admet que ce deuxième programme de chargement comprend un certain nombre de blocs, le stockage d'un bloc dans la mémoire IC3 est effectué dans l'étape 302. Un acquittement est alors envoyé signifiant le bon stockage en mémoire de ce bloc et l'opération se déroule jusqu'à stockage en mémoire de tous les blocs du deuxième programme de chargement. Dans l'étape 303, lorsque le nombre de blocs reçus est égal au nombre de blocs à recevoir, intervient alors une étape 305 identique à l'étape 203 interdisant un nouveau chargement d'un quelconque deuxième programme et l'étape 306 indique la fin du changement des blocs par le fonctionnement des diodes LED1 et LED2. L'étape 307 met fin à ce programme de chargement. Les blocs à stocker peuvent être accompagnés d'une signature prédéterminée permettant de vérifier que l'on stocke effectivement un programme autorisé.

L'invention peut comporter des variantes, notamment les suivantes :
- On a vu précédemment que le mode de pré-session était initialisé par le serveur. On peut cependant concevoir que ce mode soit initialisé sur commande de l'utilisateur au clavier du terminal par exemple.
- Dans un souci d'augmenter encore la sécurité des données échangées, ainsi que le caractère personnalisé de l'invention, on peut envisager que la clé de stockage KST utilisée par l'algorithme "DES" soit la combinaison d'au moins deux clés. Une première de ces deux clés ou clé initiale KF serait masquée dans la mémoire morte figée MM du microcontrôleur au moment de sa fabrication. La mémoire externe IC31 du microcontrôleur contiendrait alors le cryptogramme d'une clé intermédiaire KI. Enfin, la mémoire externe contiendrait, chiffrées par l'algorithme "DES" et la clé de stockage KST, les données personnalisées (CC, I).

Ainsi, au moment de l'utilisation du boîtier, la clé intermédiaire KI sera déchiffrée à l'aide de son cryptogramme et de la clé initiale KF. La clé de stockage KST sera alors déchiffrée par son cryptogramme et par la clé intermédiaire KI et les données personnalisées seront déchiffrées par la clé de stockage. Dans le cas où l'algorithme "DES" est utilisé dans le mode de pré-session, la clé de stockage KST est la clé de base KB et la clé de session KSS sera transmise chiffrée selon la clé de base KB, la clé de base étant également stockée dans les seconds moyens de mémorisation du serveur. Dans le cas de l'utilisation de l'algorithme "RSA", la clé de base est toujours la combinaison de la clé publique KBP et de la clé secrète KBS.

Cette variante permet d'envisager une personnalisation plus importante du boîtier, car il est possible de fournir à des utilisateurs différents des boîtiers ayant la même clé KF, mais ayant des clés intermédiaire KI et de stockage KST propres à chaque utilisateur. De plus, le fait que cette clé de stockage soit présente sous forme de cryptogramme permet de la stocker dans une mémoire morte programmable externe et non plus dans la mémoire morte figée du microcontrôleur.
- Le séquencement de la suite des opérations est effectué en utilisant l'octet T. Cette utilisation dépend du protocole de transmission. En règle générale, il suffit que chaque opération soit pourvue d'un élément caractéristique permettant de l'identifier.

Bien entendu, certains moyens décrits ci-dessus pourront être omis, dans les variantes où ils ne servent pas ; notamment, l'algorithme "RSA" peut n'être pas implanté dans les moyens de mémorisation du boîtier si les applications prévues utilisent exclusivement le chiffrement "DES".

## Revendications

1. Dispositif d'échange de données entre, d'une part, un terminal vidéotex (TVX) possédant un interface ligne (IL), un clavier (CL), un écran (EC), une prise aval péri-informatique (PPI), un organe d'aiguillage (AIG) entre ces moyens et une source d'alimentation, et, d'autre part, un serveur (SE) comprenant des moyens de chiffrement/déchiffrement et des moyens de dialogue,
ce dispositif étant caractérisé par le fait qu'il comprend en outre un boîtier additionnel (BA) connecté sur la prise péri-informatique (PPI) du terminal vidéotex (TVX) et alimenté par la source d'alimentation du terminal vidéotex (TVX), ce boîtier additionnel (BA) comprenant des moyens de chiffrement/déchiffrement et des moyens de dialogue (MD1), lesdits moyens de chiffrement/déchiffrement du boîtier additionnel et ceux du serveur ainsi que lesdits moyens de dialogue du boîtier additionnel et ceux du serveur étant aptes à coopérer pour établir :
- d'abord une pré-session d'échange, dans laquelle ils définissent une clé de session (KSS) qui est transmise selon une clé de base (KB, KBP, KBS),
- ensuite une session d'échange dans laquelle les moyens de dialogue du boîtier additionnel (BA) et du serveur (SE) coopèrent pour permettre l'échange de messages chiffrés et/ou signés selon la clé de session (KSS),
- ledit boîtier additionnel (BA) comprenant des moyens aptes à agir sur l'organe d'aiguillage (AIG) du terminal vidéotex (TVX), à surveiller toute autre action sur cet organe d'aiguillage (AIG) et à entraîner l'avortement de la pré-session en cas de présence d'une autre action sur l'organe d'aiguillage ou d'anomalie.

2. Dispositif selon la revendication 1, caractérisé par le fait que les moyens du boîtier additionnel (BA) aptes à agir sur l'organe d'aiguillage (AIG) sont aptes à interdire la liaison entre l'interface ligne (IL) et le clavier (CL) pendant l'introduction par le clavier d'un code confidentiel (CC).

3. Dispositif selon l'une des revendications 1 et 2, caractérisé en ce que la clé de session (KSS) est produite à partir d'au moins un premier nombre aléatoire (X').

4. Dispositif selon l'une quelconque des revendications 1 à 3, caractérisé en ce que la clé de session (KSS) comprend une première clé primaire (X') produite par les moyens de dialogue du serveur (SE).

5. Dispositif selon la revendication 4, caractérisé en ce que le serveur (SE) est apte à envoyer vers le terminal vidéotex (TVX) la première clé primaire (X').

6. Dispositif selon l'une quelconque des revendications précédentes, caractérisé en ce que le boîtier additionnel (BA) comprend des premiers moyens de mémorisation (MM, IC3), tandis que le serveur (SE) comprend des seconds moyens de mémorisation, ces deux moyens de mémorisation contenant au moins une partie de ladite clé de base.

7. Dispositif selon la revendication 6, caractérisé en ce que les premiers moyens de mémorisation comprennent des moyens de mémoire morte figée (MM) et des moyens de mémoire morte programmable (IC31).

8. Dispositif selon la revendication 7, caractérisé en ce que les moyens de mémoire morte programmable (IC31) comprennent des informations particulières (CC, I) chiffrées par les moyens de chiffrement/déchiffrement du boîtier additionnel à l'aide d'une clé de stockage (KST).

9. Dispositif selon la revendication 8, caractérisé en ce que la clé de stockage est la combinaison au moins d'une clé initiale (KF) et d'une clé intermédiaire (KI), la clé initiale (KF) étant stockée dans les moyens de mémoire morte (MM) tandis que la clé intermédiaire (KI) est stockée dans les moyens de mémoire morte programmable (IC31), chiffrée par les moyens de chiffrement/déchiffrement du boîtier additionnel à l'aide de la clé initiale (KF).

10. Dispositif selon l'une des revendications 6 à 9, caractérisé en ce que ladite clé de base est une clé unique (KB) stockée à la fois dans les premiers et seconds moyens de mémorisation.

11. Dispositif selon les revendications 4 et 10, caractérisé en ce que la clé de session (KSS) est la combinaison de la première clé primaire (X') et d'une deuxième clé primaire (X) produite par les premiers moyens de dialogue (MD1) du boîtier.

12. Dispositif selon la revendication 11, caractérisé en ce que la deuxième clé primaire (X) est produite à partir d'un deuxième nombre aléatoire.

13. Dispositif selon les revendications 2 et 12 prises en combinaison, caractérisé en ce que le deuxième nombre aléatoire (X) dépend du temps s'écoulant entre la demande de saisie du code confidentiel (CC) et la saisie proprement dite au clavier (CL).

14. Dispositif selon l'une quelconque des revendications 11 à 13, caractérisé en ce que le boîtier additionnel (BA) envoie vers le serveur (SE) la deuxième clé primaire (X).

15. Dispositif selon l'une quelconque des revendications 8 et 9 prises en combinaison avec l'une des revendications 10 à 14, caractérisé en ce que la clé de base (KB) est la clé de stockage (KST).

16. Dispositif selon l'une quelconque des revendications 6 à 9, caractérisé en ce que la clé de base comprend une clé publique (KBP) stockée dans les seconds moyens de mémorisation et une clé secrète (KBS) stockée dans les premiers moyens de mémorisation (MM), les clés publique et secrète étant complémentaires l'une de l'autre.

17. Dispositif selon les revendications 4 et 16, caractérisé en ce que la clé de session (KSS) est la première clé primaire (X').

18. Dispositif selon l'une des revendications précédentes, caractérisé en ce que le boîtier additionnel (BA) comprend en outre des moyens activés au moins lors de la première mise sous tension du terminal vidéotex (TVX) pour permettre de stocker dans le boîtier des informations personnalisées.

19. Dispositif selon l'une quelconque des revendications 2 à 18, caractérisé en ce que le boîtier additionnel (BA) comprend un premier moyen de visualisation (LED1) indiquant l'interdiction de la liaison entre l'interface ligne (IL) et le clavier (CL).

20. Dispositif selon l'une quelconque des revendications 1 à 19, caractérisé en ce que le boîtier additionnel (BA) comprend un deuxième moyen de visualisation (LED2) indiquant l'établissement de la clé de session (KSS).

21. Procédé d'échange de données entre, d'une part, un terminal vidéotex (TVX) et, d'autre part, un serveur (SE), par chiffrement et déchiffrement de données, ce procédé étant caractérisé par le fait que, avant d'établir une session d'échange de données, on définit, dans une pré-session entre le serveur et le terminal, une clé de session que l'on transmet entre le serveur (SE) et le terminal vidéotex (TVX) à l'aide d'une clé de base (KB, KBP, KBS) prédéterminée, on provoque l'avortement de cette pré-session pour toute anomalie dans la pré-session et on utilise ensuite la clé de session (KSS) pour la session d'échange de données.

## Claims

1. Data exchange device between on the one hand a videotext terminal (TVX) having a line interface (IL), a keyboard (CL), a screen (EC), a downstream video adaptor connector (PPI), a switching management device (AIG) between said means and a power supply and on the other hand a server (SE) incorporating encryption/decryption means and dialogue means, said device being characterized in that it also comprises an additional package (BA) connected to the video adaptor connector (PPI) of the videotex terminal (TVX) and which is supplied by the power supply of said terminal (TVX), said additional package (BA) incorporating encryption/decryption means and dialogue means (MD1), said encryption/decryption means of the additional package and those of the server, as well as the dialogue means of the additional package and those of the server being able to cooperate for establishing:
- firstly an exchange presession in which they define a session key (KSS), which is transmitted in accordance with a basic key (KB,KBP,KBS),
- then an exchange session in which the dialogue means of the additional package (BA) and of the server (SE) cooperate in order to permit the exchange of encrypted and/or signed messages based on the session key (KSS),
- said additional package (BA) incorporating means able to act on the switching management device (AIG) of the videotex terminal (TVX), for monitoring any other action on said switching management device (AIG) and for bringing about the abortion of the presession in the case of the presence of another action on the switching management device or an abnormality.

2. Device according to claim 1, characterized in that the means of the additional package (BA) able to act on the switching management device (AIG) are able to prevent the connection between the line interface (IL) and the keyboard (CL) during the introduction by the keyboard of a confidential code (CC).

3. Device according to one of the claims 1 and 2, characterized in that the session key (KSS) is produced from at least one first random number (X').

4. Device according to any one of the claims 1 to 3, characterized in that the session key (KSS) comprises a first primary key (X') produced by the dialogue means of the server (SE).

5. Device according to claim 4, characterized in that the server (SE) is able to supply the first primary key (X') to the videotex terminal (TVX).

6. Device according to any one of the preceding claims, characterized in that the additional package (BA) comprises first storage means (MM, IC3), whilst the server (SE) comprises second storage means, said two storage means containing at least part of said basic key.

7. Device according to claim 6, characterized in that the first storage means incorporate fixed read-only memory means (MM) and programmable read-only memory means (IC31).

8. Device according to claim 7, characterized in that the programmable read-only memory means (IC31) incorporate special informations (CC,I) encrypted by the encryption/decryption means of the additional package with the aid of a storage key (KST).

9. Device according to claim 8, characterized in that the storage key is the combination of at least one initial key (KF) and an intermediate key (KI), the initial key (KF) being stored in the read-only memory means (MM), whilst the intermediate key (KI) is stored in the programmable read-only memory means (IC31), encrypted by the encryption/decryption means of the additional package with the aid of the initial key (KF).

10. Device according to any one of the claims 6 to 9, characterized in that said basic key is a single key (KB) stored both in the first and the second storage means.

11. Device according to claims 4 and 10, characterized in that the session key (KSS) is the combination of the first primary key (X') and a second primary key (X) produced by the first dialogue means (MD1) of the package.

12. Device according to claim 11, characterized in that the second primary key (X) is produced from a second random number.

13. Device according to claims 2 and 12 in combination, characterized in that the second random number (X) is dependent on the time elapsing between the acquisition request of the confidential code (CC) and the actual acquisition to the keyboard (CL).

14. Device according to any one of the claims 11 to 13, characterized in that the additional package (BA) supplies the second primary key (X) to the server (SE).

15. Device according to either of the claims 8 and 9 in combination with one of the claims 10 to 14, characterized in that the basic key (KB) is the storage key (KST).

16. Device according to any one of the claims 6 to 9, characterized in that the basic key comprises a public key (KBP) stored in the second storage means and a secret key (KBS) stored in the first storage means (MM), the public and secret keys being complementary to one another.

17. Device according to claims 4 and 16, characterized in that the session key (KSS) is the first primary key (X').

18. Device according to any one of the preceding claims, characterized in that the additional package (BA) also comprises means activated at least during the first energizing of the videotex terminal (TVX) for permitting the storage in the package of the personalized informations.

19. Device according to any one of the claims 2 to 18, characterized in that the additional package (BA) comprises a first display means (LED1) indicating the interdiction of the connection between the line interface (IL) and the keyboard (CL).

20. Device according to any one of the claims 1 to 19, characterized in that the additional package (BA) comprises a second display means (LED2) indicating the establishment of the session key (KSS).

21. Process for the exchange of data between on the one hand a videotex terminal (TVX) and on the other hand a server (SE) by data encryption and decryption, said process being characterized in that, before establishing a data exchange session, in a presession between the server and the terminal a session key is defined which is transmitted between the server (SE) and the videotex terminal (TVX) with the aid of a predetermined basic key (KB,KBP,KBS), this presession is aborted if there is any abnormality in the presession and the session key (KSS) is then used for the data exchange session.

## Patentansprüche

1. Vorrichtung zum Austausch von Daten zwischen einem Bildschirmtext-Endgerät (TVX) einerseits, der eine Schnittstellenleitung (IL), eine Tastatur (CL), einen Bildschirm (EC), einen Periferie-Daten-Anschluß (PPI), eine Verteiler-Einrichtung (AIG) zwischen diesen Einrichtungen und einer Versorgungsquelle aufweist, und andererseits, einem Anbieter (SE), der Einrichtungen zum Chiffrieren/Dechiffrieren und Dialog-Einrichtungen umfaßt,
**dadurch gekennzeichnet, daß** die Vorrichtung weiterhin eine zusätzliche Box (BA) einschließt, die über den Periferie-Daten-Anschluß (PPI) mit dem Bildschirmtext-Endgerät (TVX) verbunden ist und durch die Versorgungsquelle des Bildschirmtext-Endgeräts (TVX) versorgt wird, wobei diese zusätzliche Box (BA) Einrichtungen zum Chiffrieren/Dechiffrieren und Dialog-Einrichtungen (MD1) umfaßt, und wobei die Einrichtungen der zusätzlichen Box zum Chiffrieren/Dechiffrieren und diese des Anbieters ebenso wie die Dialog-Einrichtungen der zusätzlichen Box und diese des Anbieters geeignet sind um zusammenzuwirken, damit sichergestellt wird:
- zuerst einen Vorsitzungsaustausch, in welchem sie einen Sitzungsschlüssel (KSS) definieren, welcher gemäß einem Basisschlüssel (KB, KBP, KBS) übertragen wird,
- anschließend einen Sitzungsaustausch, in welchem die Dialogeinrichtungen der zusätzlichen Box (BA) und des Anbieters (SE) zusammenwirken, um den Austausch von chiffrierten Nachrichten und/oder Zeichen gemäß dem Sitzungsschlüssel (KSS) zu erlauben,
- die zusätzliche Box (BA) umfasst Einrichtungen, die geeignet sind, um auf der Verteilereinrichtung (AIG) des Bildschirmtext-Endgeräts (TVX) zu wirken, um alle anderen Vorgänge auf dieser Verteilereinrichtung (AIG) zu überwachen und den Abbruch der Vorsitzung im Falle der Anwesenheit eines anderen Vorganges auf der Verteilereinrichtung oder einer Anomalie zu veranlassen.

2. Vorrichtung nach Anspruch 1, **dadurch gekennzeichnet, daß** die Einrichtungen der zusätzlichen Box (BA), die geeignet sind, auf der Verteilereinrichtung (AIG) zu wirken, um eine Verbindung zwischen der Schnittstellenleitung (IL) und der Tastatur (CL) während der Einführung eines vertraulichen Codes (CC) auf der Tastatur zu verbieten.

3. Vorrichtung nach einem der vorangegangenen Ansprüche 1 und 2, **dadurch gekennzeichnet, daß** der Sitzungs-schlüssel (KSS) auf der Basis von mindestens einer ersten Zufallszahl (X') erzeugt wird.

4. Vorrichtung nach einem der vorangegangenen Ansprüche 1 bis 3, **dadurch gekennzeichnet, daß** der Sitzungs-schlüssel (KSS) einen ersten Primärschlüssel (X') umfaßt, welcher durch die Dialog-Einrichtungen des Anbieters (SE) erzeugt wird.

5. Vorrichtung nach Anspruch 4, **dadurch gekennzeichnet, daß** der Anbieter (SE) geeignet ist, den ersten Primärschlüssel (X') zum Bildschirmtext-Endgerät (TVX) zu senden.

6. Vorrichtung nach einem der vorangegangenen Ansprüche, **dadurch gekennzeichnet, daß** die zusätzliche Box (BA) erste Speichereinrichtungen (MM, IC3) beinhaltet, während der Anbieter (SE) zweite Speichereinrichtungen umfaßt, wobei diese zwei Speichereinrichtungen mindesten einen Teil des besagten Basisschlüssel enthalten.

7. Vorrichtung nach Anspruch 6, **dadurch gekennzeichnet, daß** die ersten Speichereinrichtungen festgelegte Festspeichereinrichtungen (MM) und programmierbare Festspeichereinrichtungen (IC31) umfassen.

8. Vorrichtung nach Anspruch 7, **dadurch gekennzeichnet, daß** die programmierbaren Festspeichereinrichtungen (IC31) besondere Informationen (CC, I) enthalten, die durch die Chiffrier-/Dechiffrier-Einrichtungen der zusätzlichen Box mit Hilfe eines Speicherschlüssels (KST) chiffriert werden.

9. Vorichtung nach Anspruch 8, **dadurch gekennzeichnet, daß** der Speicherschlüssel die Kombination von mindestens einem Anfangsschlüssel (KF) und einem Zwischenschlüssel (KI) darstellt, wobei der Anfangsschlüssel (KF) in den Festspeichereinrichtungen (MM) gespeichert ist, während der Zwischenschlüssel (KI) in den programmierbaren Festspeichereinrichtungen (IC31) gespeichert ist, chiffriert durch die Chiffrier-/Dechiffrier-Einrichtungen der zusätzlichen Box mit Hilfe des Anfangsschlüssels (KF).

10. Vorrichtung nach einem der Ansprüche 6 bis 9, **dadurch gekennzeichnet, daß** der Basisschlüssel ein Einzelschlüsel (KB) ist, welcher zugleich in den ersten und zweiten Speichereinrichtungen gespeichert ist.

11. Vorrichtung nach einem der Ansprüche 4 und 10, **dadurch gekennzeichnet, daß** der Sitzungsschlüssel (KSS) die Kombination des ersten Primärschlüssels (X') und eines zweiten Primärschlüssels (X) ist, welcher durch die ersten Dialogeinrichtung (MD1) der Box erzeugt wird.

12. Vorrichtung nach Anspruch 11, **dadurch gekennzeichnet,** **daß** der zweite Primärschlüssel (X) auf der Basis einer zweiten Zufallszahl erzeugt wird.

13. Vorrichtung nach einem der Ansprüche 2 und 12 in Kombination, **dadurch gekennzeichnet, daß** die zweite Zufallszahl (X) von der Zeit abhängt, die zwischen der Anforderung nach der Aufnahme des vertraulichen Codes (CC) und der richtig auf der Tastatur (CL) gegebenen Aufnahme verstreicht.

14. Vorrichtung nach einem der Ansprüche 11 bis 13, **dadurch gekennzeichnet, daß** die zusätzliche Box (BA) den zweiten Primärschlüssel (X) zu dem Anbieter (SE) sendet.

15. Vorrichtung nach einem der Ansprüche 8 und 9 in Kombination mit einem der Ansprüche 10 bis 14, **dadurch gekennzeichnet, daß** der Basisschlüssel (KB) der Speicherschlüssel (KST) ist.

16. Vorrichtung nach einem der Ansprüche 6 bis 9, **dadurch gekennzeichnet, daß** der Basisschlüssel einen öffentlichen Schlüssel (KBP) umfaßt, welcher in den zweiten Speichereinrichtungen gespeichert ist, und einen Geheimschlüssel (KBS) umfaßt, welcher in den ersten Speichereinrichtungen (MM) gespeichert ist, wobei der öffentliche und geheime Schlüssel einander ergänzen.

17. Vorrichtung nach einem der Ansprüche 4 und 16, **dadurch gekennzeichnet, daß** der Sitzungsschlüssel (KSS) gleich dem ersten Primärschlüssel (X') ist.

18. Vorrichtung nach einem der vorangegangenen Ansprüche, **dadurch gekennzeichnet, daß** die zusätzliche Box (BA) außerdem Einrichtungen umfaßt, die mindestens durch die erste Unterspannungssetzung des Bildschirmtext-Endgeräts (TVX) aktiviert wird, um eine Speicherung von personnenbezogenen Informationen in der Box zu erlauben.

19. Vorrichtung nach einem der Ansprüche 2 bis 18, **dadurch gekennzeichnet, daß** die zusätzliche Box (BA) eine erste Visualisierungseinrichtung (LED1) umfaßt, welche die Untersagung der Verbindung zwischen der Schnittstellenleitung (IL) und der Tastatur (CL) anzeigt.

20. Vorrichtung nach einem der Ansprüche 1 bis 19, **dadurch gekennzeichnet, daß** die zusätzliche Box (BA) eine zweite Visualisierungseinrichtung (LED2) umfaßt, welche die Errichtung des Sitzungsschlüssel (KSS) anzeigt.

21. Verfahren zm Austausch von Daten zwischen einem Bildschirmtext-Endgerät (TVX) einerseits, und andererseits einem Anbieter (SE) durch Chiffrieren und Dechiffrieren der Daten, wobei das Verfahren **dadurch gekennzeichnet ist, daß** vor dem Einrichten einer Sitzung zum Austausch von Daten in einer Vorsitzung zwischen dem Anbieter und dem Terminal ein Sitzungsschlüssel definiert wird, der zwischen dem Anbieter (SE) und dem Bildschirmtext-Endgerät (TVX) mit Hilfe eines vorbestimmten Basisschlüssels (KB, KBP, KBS) überträgt, und daß der Abbruch der Vorsitzung durch jede Anomalie in der Vorsitzung hervorgerufen wird und anschließend der Sitzungsschlüssel (KSS) für die Sitzung zum Austauch der Daten verwendet wird.
